# EUROPEAN PATENT SPECIFICATION

(11) **EP 0 364 209 B1**
(45) Date of publication and mention of the grant of the patent: **15.06.1994**
(21) Application number: 89310346.5
(22) Date of filing: 10.10.1989
(51) Int. Cl.: G21C 19/44

(54) **Method of dissolving spent nuclear fuel**
Verfahren zum Auflösen von verbrauchtem Brennstoff
Procédé pour la dissolution de combustible nucléaire irradié

(30) Priority: 12.10.1988 JP 256645/88
(43) Date of publication of application: 18.04.1990
(73) Proprietor: DORYOKURO KAKUNENRYO KAIHATSU JIGYODAN, Minato-ku Tokyo 107 (JP)
(72) Inventor: Ohtsuka, Katsuyuki Doryokuro Kakunenryo Kaihatsu, Tokai-mura Naka-gun Ibaraki 319-11 (JP); Takahashi, Yoshiharu Doryokuro Kakunenryo Kaihatsu, Tokai-mura Naka-gun Ibaraki 319-11 (JP); Ohuchi, Jin Doryokuro Kakunenryo Kaihatsu, Tokai-mura Naka-gun Ibaraki 319-11 (JP)
(74) Representative: Moore, Anthony John

(56) References cited:
- DE-B- 1 489 706
- DE-B- 2 110 419

## Description

This invention relates to a method of dissolving spent nuclear fuel and fuel scrap at a nuclear fuel reprocessing plant or a nuclear fuel production plant.

In order to separate the useful elements uranium and plutonium from spent fuel, and to recover and re-utilize these elements at a nuclear power facility such as a nuclear fuel reprocessing plant or a nuclear fuel production plant, the practice in the prior art such as DE-A-2 110 419 is to immerse and dissolve the spent fuel or fuel scrap in heated nitric acid solution contained in a dissolving tank. Since the dissolving tank is necessarily of strictly limited dimensions for the sake of critical safety management, the nitric acid solution within the tank is circulated by convection currents that result from heating, whereby the materials to be treated become dissolved.

While dissolution of the spent fuel or fuel scrap is promoted by convection currents, in accordance with the prior art, sole reliance upon convection currents does not provide an adequate stirring effect, so that the dissolution process requires considerable time.

DE-B-1 489 706 discloses a method for dissolving spent nuclear fuel, in which ultrasonic waves are applied to the dissolving solution and waste to be disposed.

An aim of the present invention is to solve the foregoing disadvantage of the known method of dissolving spent nuclear fuel.

According to the present invention there is provided a method of dissolving spent nuclear fuel by immersing a material to be treated in a dissolving solution and applying heat and ultrasonic waves to dissolve the material, comprising the steps of immersing spent nuclear fuel in a dissolving solution contained in a dissolving tank and irradiating the dissolving solution and the spent nuclear fuel with ultrasonic waves, characterised in that the dissolving solution is heated outside the tank by heating an outside tube connected at its upper end to the upper portion of the tank and at its lower end to the lower portion of the tank so as to cause convective circulation of the dissolving solution through the tank and said tube, whereby the spent nuclear fuel is dissolved due to said convective circulation and ultrasonic radiation, the level of the dissolving solution being maintained to ensure said convective circulation.

Ultrasonic waves are thus utilized to produce breakdown at the surface of the material to be treated, thereby raising the rate of dissolution and improving the stirring effect of the nitric acid solution.

Preferably, the ultrasonic waves are generated by an ultrasonic oscillator, or an extending portion thereof, placed in a tank containing the dissolving solution.

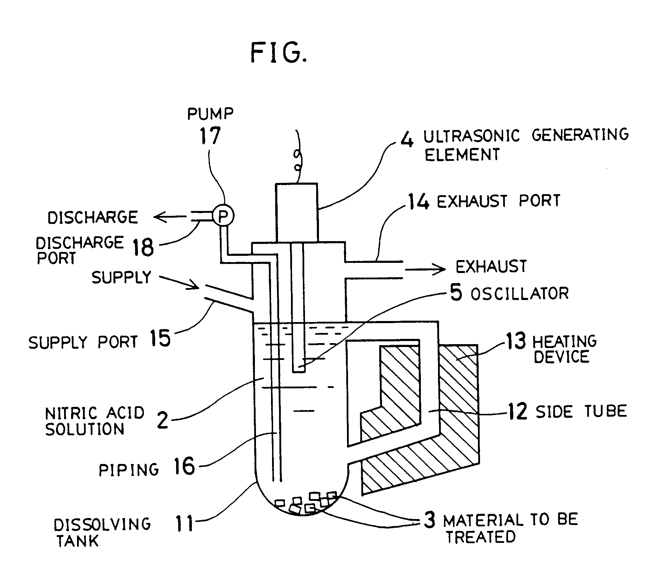

Other features and advantages of the present invention will be apparent from the following description of an embodiment of the invention taken in conjunction with the single figure of the accompanying drawings, which is a diagrammatic section illustrating an embodiment of the present invention.

In the figure, numeral 11 denotes a dissolving tank, 12 a side tube, 13 a heating device, 14 an exhaust port, 15 a supply port, 16 piping, 17 a pump, and 18 a discharge port.

The dissolving tank 11 has a side tube 12 on its outside, and the upper and lower portions of the side tube 12 communicate with the dissolving tank 11. The nitric acid solution 2 is introduced until it reaches a level above the side tube 12. The nitric acid solution 2 within the side tube 12 is heated by the heating device 13, thereby circulating the nitric acid solution 2 and heating it to a predetermined temperature. The dissolving tank 11 is equipped with an ultrasonic generating element 4, including an oscillator 5 capable of being inserted below the liquid level of the nitric acid solution 2; the exhaust port 14; the supply port 15; and the pump assembly, which includes the pump 17, and the piping 16 inserted deeply into the dissolving tank 11; and the discharge port 18.

The nitric acid solution 2 and the material 3 to be treated are supplied into the dissolving tank 11 from the supply port 15, and the nitric acid solution and material 3 are irradiated with ultrasonic waves from the oscillator 5 while the nitric acid solution 2 is being heated by the heating device 13. As a result, dissolution is accelerated. The gases evolved at this time are exhausted into a waste treatment system from the exhaust port 14. After material to be treated is dissolved, the nitric acid solution 2 is discharged from the discharge port 18 via piping 16 to a useful substance treatment system.

Thus, in accordance with the present invention, stirring of the dissolving solution is promoted by the combination of heating of the outside tube containing the dissolving solution with agitation produced by ultrasonic waves to break down the surface of materials to be treated, such as spent fuel and fuel scrap, thereby greatly raising the rate of dissolution.

## Claims

1. A method of dissolving spent nuclear fuel (3) by immersing a material (3) to be treated in a dissolving solution (2) and applying heat and ultrasonic waves to dissolve the material (3), comprising the steps of immersing spent nuclear fuel (3) in a dissolving solution (2) contained in a dissolving tank (11) and irradiating the dissolving solution (2) and the spent nuclear fuel (3) with ultrasonic waves (5), characterised in that the dissolving solution (2) is heated outside the tank (1) by heating (13) an outside tube (12) connected at its upper end to the upper portion of the tank (11) and at its lower end to the lower portion of the tank (11) so as to cause convective circulation of the dissolving solution (2) through the tank (11) and said tube (12), whereby the spent nuclear fuel (3) is dissolved due to said convective circulation and ultrasonic radiation, the level of the dissolving solution (3) being maintained to ensure said convective circulation.

## Patentansprüche

1. Verfahren zum Auflösen von verbrauchtem Kernbrennstoff (3) durch Versenken des zu behandelnden Materials (3) in einem Lösungsmittel (2) und Anwenden von Hitze und Ultraschallwellen zum Auflösen der Materials (3), umfassend die Stufen des Einbringens des verbrauchten Kernbrennstoffs in ein in einem Auflösetank (11) enthaltenen Lösungsmittel (2) und Bestrahlen des Lösungsmittels (2) und des verbrauchten Kernbrennstoffs mit Ultraschallwellen (5), dadurch gekennzeichnet, daß das Lösungsmittel (2) außerhalb des Tanks (1) durch Erhitzen (13) eines äußeren Rohrs (12) erhitzt wird, das an seinem oberen Ende mit dem oberen Abschnitt des Tanks (11) und an seinem unteren Ende mit dem unteren Abschnitt des Tanks (11) verbunden ist, um konvektive Zirkulation des Lösungsmittels (2) durch den Tank (11) und das genannte Rohr (12) zu verursachen, wodurch der verbrauchte Kernbrennstoff (3) infolge der konvektiven Zirkulation und der Ultraschallbestrahlung aufgelöst wird, während das Niveau des Lösungsmittels (3) so gehalten wird, daß die konvektive Zirkulation sichergestellt ist.

## Revendications

1. Procédé pour dissoudre un combustible nucléaire épuisé (3) en plongeant le matériau (3) à traiter dans une solution dissolvante (2) et en chauffant et en appliquant des ondes ultrasoniques pour dissoudre le matériau (3), comprenant les étapes suivantes : plonger le combustible nucléaire épuisé (3) dans une solution dissolvante (2) contenue dans une cuve de dissolution (11) et exposer la solution dissolvante (2) et le combustible nucléaire épuisé (3) à des ondes ultrasoniques (5), caractérisé en ce que la solution dissolvante (2) est chauffée à l'extérieur de la cuve (11) en chauffant (13) un tube extérieur (12), dont l'extrémité supérieure est raccordée à la portion supérieure de la cuve (11) et dont l'extrémité inférieure est raccordée à la portion inférieure de la cuve (11), de façon à provoquer une circulation par convexion de la solution dissolvante (2) à travers la cuve (11) et ledit tube (12), d'où il résulte que le combustible nucléaire épuisé (3) est dissous du fait de cette circulation par convexion et de ce rayonnement ultrasonique, le niveau de la solution dissolvante (2) étant maintenu pour assurer cette circulation par convexion.
